# EUROPEAN PATENT APPLICATION

(11) **EP 3 333 790 A1**
(43) Date of publication of application: **13.06.2018**
(21) Application number: 16202762.7
(22) Date of filing: 07.12.2016
(51) Int. Cl.: G06Q 20/34, G06Q 20/36, G06Q 20/32, G06Q 20/20

(54) **AUTOMATIC CONTEXT-BASED SELECTION FROM A DIGITAL WALLET**

(71) Applicant: Mastercard International Incorporated, New York, NY 10577 (US)
(72) Inventor: NOE, James, West Wickham, BR4 0BL (GB); TIERNEY, John, Wirral, Merseyside CH60 7TF (GB)
(74) Representative: Gill Jennings & Every LLP

(57) **Abstract**

The present disclosure relates to increasing the speed of electronic transactions using digital wallets. Aspects relate to a mobile user device, a computer readable medium and a method performed by a mobile user device comprising a wireless transmitter, a wireless receiver, a user interface, a memory storing a digital wallet application and a processor communicatively coupled to the wireless transmitter, wireless receiver, user interface and memory, the method comprising the processor: determining a location of the mobile user device according to location data received by the wireless receiver; determining that use of the digital wallet application is required according to input received by the user interface or the wireless receiver; responsive thereto, automatically selecting one of a plurality of digitised cards associated with the digital wallet application in dependence on the determined location; and subsequently providing the digitised card credentials to the wireless transmitter.

## Description

The present disclosure relates to increasing the speed of electronic transactions using digital wallets. More specifically, aspects relate to a mobile user device, a computer readable medium and a method performed by a mobile user device.

As the functionality of mobile user devices such as mobile telephones, tablet computers and smart wearables has expanded, users have become accustomed to carrying their devices at all times, and expect them to be able to perform much more than just their primary function. In particular, as mobile devices have been added to the short list of items they (almost) always take with them when leaving their home, users have found it advantageous if their devices can take the place of other items they would otherwise generally carry, such as keys and wallets.

Digital wallets have been facilitated by advances in security of transmission of data over the internet, allowing transactions to be made online, and by the introduction of contactless communication technology to mobile user devices. For example, near field communication (NFC) communication technology can be incorporated into small form factor objects such as credit and debit cards and, increasingly, mobile user devices such as smartphones, tablets and smart watches. As more merchants install NFC readers on their premises, contactless payment enabled mobile user devices are beginning to replace traditional wallets and purses.

However, at present digital wallets operate in a very similar way to physical wallets. A digital wallet application typically stores images of a plurality of digitised cards, each representing a particular account such as a debit, credit or loyalty point account. Such "digitised cards" may have physical equivalents, or may be the sole means of making payment from their associated account. When a user wishes to make a transaction, they must open the application and select a digitised card to use before tapping their device on a reader to effect the transaction via the provision of digitised card credentials from the device to the reader. Such digitised card credentials could for example comprising a tokenised version of one or more of the usual account payment credentials (personal account number (PAN), expiry date, security code etc.) This process is directly analogous to opening a physical wallet, selecting a card for payment, and providing that card to a card reader connected to a payment network which then authorises or declines the requested transaction.

Where co-badged cards are concerned, conventionally a physical co-badged card provides two sets of credentials to the point of sale (POS) terminal, one for each scheme it can be used in. The POS terminal then selects the credentials for the scheme it is a part of and uses those to start processing of the transaction. In existing digital wallet applications, the credentials for each card (whether co-badged or not) are digitised (to keep the credentials secure) and the digitised card credentials are what is provided to the POS terminal. In some cases, for co-badged cards only one set of credentials will be passed to the POS terminal, for example if the digital wallet application supports consumer selection of the digitised card to use. Otherwise, the POS terminal and device have an analogous interaction when compared to a physical co-badged card.

The selection of a card, whether physical or digitised, introduces a delay into the transaction process. The selection being under the control of the user also allows for human error resulting in further delays. For example, a user may not check that their selected card belongs to a card association scheme in which the merchant participates. This could result in a small delay as a cashier notices the error and asks the user to select a different card. It could result in a longer delay if the cashier fails to spot the error, or if the POS terminal is unattended, and the POS terminal itself, or another entity within the payment network, must spot the error and report it to the user. As another example, if a user realises part-way through a transaction that they would have been better off selecting a different card (e.g. to earn cash-back, or other loyalty benefits from a merchant associated with a particular card), the transaction may have to be cancelled and re-started.

Some digital wallets provide the user with an option to set up a default card to be used if they do not actively request a different one on opening the wallet application. Another option is for the default to be set to the last card used. These default rules cut out the time taken for the selection step, but may inadvertently result in more errors of the other types mentioned above since the user is not forced to consider which card is most appropriate.

What is needed is a way of implementing a digital wallet which reduces the delays to transactions being completed suffered by digital wallets modelled closely on their physical counterparts.

According to a first aspect, there is provided a method performed by a mobile user device comprising a wireless transmitter, a wireless receiver, a user interface, a memory storing a digital wallet application and a processor communicatively coupled to the wireless transmitter, wireless receiver, user interface and memory, the method comprising the processor: determining a location of the mobile user device according to location data received by the wireless receiver; determining that use of the digital wallet application is required according to input received by the user interface or the wireless receiver; responsive thereto, automatically selecting one of a plurality of digitised cards associated with the digital wallet application in dependence on the determined location; and subsequently providing the digitised card credentials to the wireless transmitter.

The selecting can be done further in dependence on one or more rules stored in the memory.

The method can further comprise, subsequent to selecting the digitised card, the processor causing the user interface to alert a user that the digital wallet application is ready for use.

The determined location can be specified by reference to one or both of a jurisdiction and a particular merchant.

The wireless receiver can operate according to one or more protocols selected from: a satellite navigation protocol, a cellular protocol, a WiFi protocol, a Bluetooth™ protocol and a near field communication, 'NFC' protocol.

The determining of the location can be performed in response to the determining that use of the digital wallet application is required.

The determining that use of the digital wallet application is required can be performed in response to the determining of the location.

Multiple digitised cards of the plurality of digitised cards can be associated with a single co-badged card account.

The method can further comprise, between selecting the digitised card and providing the digitised card to the wireless transmitter, the processor: determining that the selected digitised card does not correspond to a default account pre-stored in the memory; causing the user interface to prompt a user to provide confirmation that a non-default account can be used; and receiving said confirmation from the user interface.

The method can further comprise, after receiving the confirmation, the processor: causing the user interface to prompt the user to indicate whether an account corresponding to the selected digitised card should be made a location-specific default for a location category comprising the determined location; receiving an affirmative indication from the user interface; and adding the selected digitised card, together with the location category, to a location-specific default list stored in the memory.

The method can further comprise, prior to providing the digitised card to the wireless transmitter, the processor: causing the user interface to prompt a user to provide authentication credentials; receiving authentication credentials from the user interface; and determining that the received authentication credentials match authentication credentials stored in the memory.

According to a second aspect there is provided a computer readable medium comprising a set of program instructions which, when executed by a processor, cause the processor to perform the method of the first aspect.

According to a third aspect there is provided a mobile user device comprising a wireless transmitter, a wireless receiver, a user interface, a memory storing a digital wallet application and a processor communicatively coupled to the wireless transmitter, wireless receiver, user interface and memory, the processor being configured to perform the method of the first aspect.

According to a fourth aspect there is provided a system comprising the mobile user device of the third aspect and a point of sale (POS) terminal, the mobile user device and POS terminal being configured for wireless communication with one another.

The system can further comprise one or more of: a satellite navigation network satellite, a cellular base station, a WiFi access point, and a Bluetooth™ beacon, configured for wireless communication with the mobile user device, the mobile user device being correspondingly configured for wireless communication therewith.

Aspects of the present disclosure will now be described by way of example with reference to the accompanying figures. In the figures:
Figure 1 schematically illustrates an example communication system;
Figure 2 illustrates an example method performed by a mobile user device;
Figure 3A illustrates an example of how the digital wallet described herein can be used to avoid an incorrect card being presented in one common circumstance;
Figure 3B illustrates example digital wallet application logic;
Figure 3C illustrates further example digital wallet application logic;
Figure 3D illustrates example logic that could be followed in response to a user failing to confirm an automatic digitised card selection; and
Figure 4 illustrates more example digital wallet application logic.

The following description is presented to enable any person skilled in the art to make and use the system, and is provided in the context of a particular application. Various modifications to the disclosed embodiments will be readily apparent to those skilled in the art.

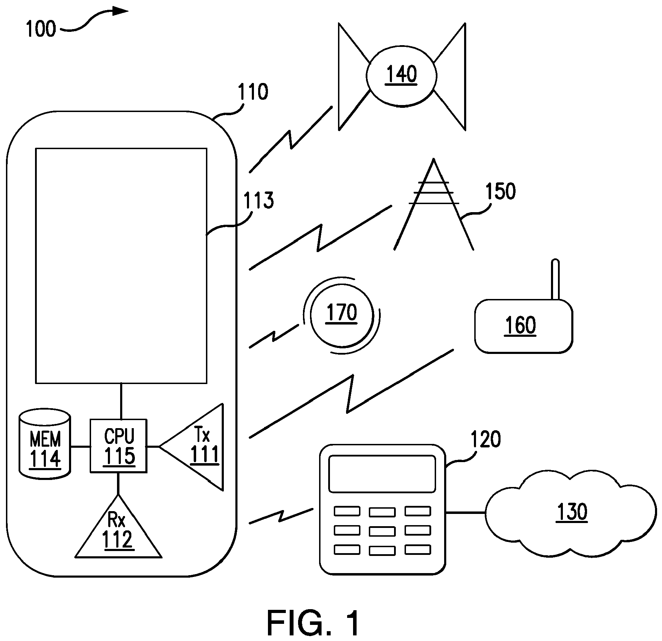

Figure 1 schematically illustrates a system 100 comprising a mobile user device 110, an electronic POS terminal 120 connected to a payment network 130, a satellite navigation network satellite 140, a cellular base station 150, a WiFi access point 160 and a Bluetooth™ beacon 170.

The mobile user device 110 comprises a wireless transmitter 111, a wireless receiver 112, a user interface 113, a memory 114 and a processor 115. The memory 114 stores instructions which, when executed by the processor 115, cause it to run a digital wallet application.

The memory 114 thus also stores a plurality of digitised cards associated with the digital wallet application, each digitised card representing a set of payment credentials for a particular account to which a user of the mobile user device 110 has access. Such accounts can comprise, for example, one or more of: debit accounts, credit accounts, corporate/commercial accounts, charge card accounts, pre-paid accounts, loyalty point accounts, proprietary/private label accounts and savings accounts. The memory could for example comprise one or more of a subscriber identity module (SIM), a secure element (SE), a trusted execution environment (TEE) and a rich execution environment (REE), or support another form of Host Card Emulation (HCE).

In addition to the memory 114, the processor 115 is operably connected to each of the transmitter 111, receiver 112 and user interface 113 such that the digital wallet application can received inputs from the receiver 112 and the user interface 113, and can output to the transmitter 111 and the user interface 113.

The wireless transmitter 111 comprises one or more types of wireless transmitters, each configured for transmitting according to a particular protocol.

Two or more of them could for example be co-located in a transmitter unit and share an antenna. Alternatively, they could be distributed around the mobile user device 110 in separate locations. At least one of the transmitters is configured for communicating digitised card credentials to the POS terminal 120 when a transaction is to be made using the digital wallet application. This could for example be an NFC transmitter. Wireless transmitter 111 can optionally further comprise types of transmitter suitable for communication with one or more of the satellite navigation network satellite 140, the cellular base station 150, the WiFi access point 160, the Bluetooth™ beacon 170, and any other sources of device location information.

The wireless receiver 112 similarly comprises one or more types of wireless transmitters, each configured for transmitting according to a particular protocol. Two or more of them could for example be co-located in a receiver unit and share an antenna. Alternatively, they could be distributed around the mobile user device 110 in separate locations. At least one of the receivers is configured for receiving location data. Wireless receiver 112 can optionally further comprise types of receiver suitable for communication with one or more of the POS terminal 120, the satellite navigation network satellite 140, the cellular base station 150, the WiFi access point 160 and the Bluetooth™ beacon 170.

The wireless transmitter 111 and the wireless receiver 112 could be separate modules, or could both be comprised in a transceiver, which for example could share use of an antenna. Similarly, any combination of their constituent types of transmitter and receiver could be provided in a multi-functional module to allow for resource sharing.

The system need not include all (or any) of the satellite navigation network satellite 140, the cellular base station 150, the WiFi access point 160 and the Bluetooth™ beacon 170. All that is required is at least one means of communicating data to the mobile user device 110 indicating its location.

For example, if the wireless receiver 112 comprises a satellite navigation receiver, e.g. a global positioning system (GPS) receiver, the satellite navigation network satellite 140 can indicate to the device its latitude and longitude by triangulation of communications from multiple satellites within the network.

Alternatively or additionally, if the wireless receiver 112 comprises a cellular telephone network receiver, then the location of the mobile user device 110 can be determined to be within the boundaries of a cell the mobile user device 110 is currently connected to the base station 150 of. More precise location data could be obtained by measuring the attenuation and/or time of flight of a signal between the mobile user device 110 and one or more cellular base stations 150 (in order to establish the distance travelled by the signal).

Similar techniques could be used on a smaller scale, alternatively or additionally, by making use of one or more WiFi access points 160. That is, if the wireless receiver 112 comprises a WiFi receiver, then the location of the mobile user device 110 can be determined to be within range of a WiFi access point the mobile user device 110 is connected to. More precise location data could be obtained by measuring the attenuation and/or time of flight of a signal between the mobile user device 110 and one or more of an array of WiFi access points 160 (in order to establish the distance travelled by the signal).

Alternatively or additionally, one or more Bluetooth™ beacons 170 could be used in exactly the same way as the WiFi access points 160 described above, but with the scale reduced even further due to the shorter range of Bluetooth™ compared to WiFi.

As another alternative (which again could be additional to any of the others), the POS terminal 120 itself could communicate location data to the mobile user device 110. For example, an NFC transmitter of the POS terminal could be configured to report the POS terminal's location to any other NFC device within range before accepting digitised card credentials from that mobile user device.

The user interface 113 could comprise one or more user input devices, for example a touchscreen, touchpad, keyboard, button, joystick, microphone, camera or scanner (e.g. a QR code scanner, or a biometric scanner such as a fingerprint or iris scanner). It could alternatively or additionally comprise one or more user output devices, for example a graphical user interface (e.g. displayed on a screen, monitor, projector or touchscreen), an indicator light, a speaker, a vibrating element or a refreshable braille display.

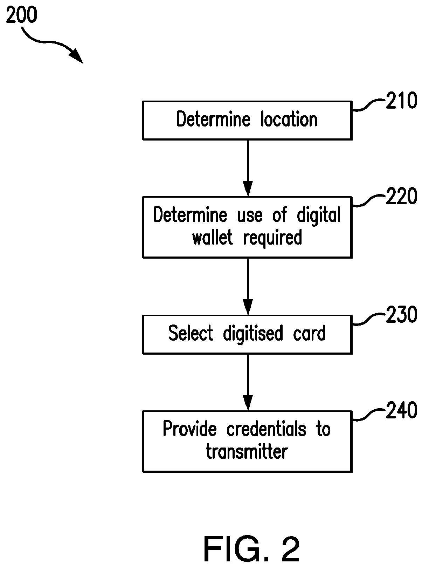

The mobile user device 110 can make use of received location data to aid in determining which digitised card credentials to provide to the POS terminal 120 to start a transaction, as illustrated by the flowchart of Figure 2.

Figure 2 illustrates a method 200 performed by a mobile user device comprising a wireless transmitter, a wireless receiver, a user interface, a memory storing a digital wallet application and a processor communicatively coupled to the wireless transmitter, wireless receiver, user interface and memory.

At step 210 the processor determines a location of the mobile user device according to location data received by the wireless receiver. For example the location data can be obtained according to one or more of the schemes involving satellite navigation or cellular networks, WiFi access points, Bluetooth beacons or NFC transmitters described above.

"Determining", as used in relation to step 210, and throughout this specification, can mean processing data in order to come to a conclusion, or alternatively can mean receiving data specifying a conclusion which has been arrived at via processing on another device. That is, the mobile user device may receive raw data which it interprets to determine its location, or it may receive data indicating its location, the processing burden having been offloaded to an external entity, e.g. to save battery/processing power and/or memory of the mobile user device. Such an external entity could be the entity that collected the raw data required to establish the mobile user device's location, or could be communicatively coupled to such an entity. Alternatively, some initial processing could be offloaded, and the processor of the mobile user device could complete the processing.

At step 220, the processor determines that use of the digital wallet application is required according to input received by the user interface or the wireless receiver. For example, a user could make use of the user interface to open the mobile wallet application, e.g. by using a touchscreen to select a mobile wallet icon, or by scanning a QR code located within merchant premises. Alternatively, the mobile user device could be brought within range of a wireless transmitter of the merchant which can indicate to the mobile user device that it has been taken into a payment area. For example, the mobile user device could be tapped on an NFC reader at the POS terminal, or could receive a beacon signal from a Bluetooth beacon or WiFi access point located at or near the POS terminal.

In response to determining that use of a digital wallet application is required, at step 230 the processor automatically selects one of a plurality of digitised cards associated with the digital wallet application in dependence on the determined location. This decision can be made based on rules stored in the mobile user device's memory, or stored externally but quickly accessible to the mobile user device. Such rules could be entirely user-configurable and updateable, or the digital wallet application could be provided pre-configured with a default set of rules, some or all of which could be user-updateable. The rules could for example:
- set a general default digitised card;
- set location-specific default digitised cards;
- set a priority order for the digitised cards;
- require user confirmation of automatic selection in defined circumstances; or
- set any combination of the above.

The user interface could at this point alert the user in some way that the mobile wallet application is ready for use. For example a notification could be displayed on a screen and/or the device could vibrate. The user could optionally confirm card selection at this point via a user interface of the device.

Once a digitised card has been selected, at step 240 the processor provides the corresponding digitised card credentials to the wireless transmitter (e.g. an NFC transmitter) to start the transaction process.

Location could be determined to whatever level of granularity possible in or appropriate for the circumstances. For example, if the selection rules only require an indication of the jurisdiction (e.g. country or state) the mobile user device is in (e.g. to determine which digitised card associated with a co-badged card account to use), any of the location determination methods discussed above should be sufficient. In contrast, if selection rules require pinpointing the merchant store the mobile user device is in (e.g. to ensure the merchant's loyalty account is used), more granular location data is required. For example, determining which cell of a cellular network the mobile user device is in will probably not be sufficient; triangulation using multiple cellular base stations would be needed if location is to be determined from cellular signals. Alternatively or additionally, the shorter ranges of WiFi, Bluetooth™ or NFC could be made use of in this situation.

As illustrated in Figure 2, determining that use of the digital wallet application is required can follow determining the mobile user device's location. The location determination could in fact be the trigger for determining that the digital wallet application is required, for example if the location data received comes from a WiFi or Bluetooth™ beacon located so that their area of coverage is within a checkout area such as the checkout lanes of a supermarket. Alternatively, the location determination could be triggered by determining that the digital wallet application is required. For example, to save battery usage, location determination could be performed in response to the user opening the digital wallet application. The two determinations could alternatively be made at substantially the same time, for example in response to the user tapping the device on an NFC POS terminal.

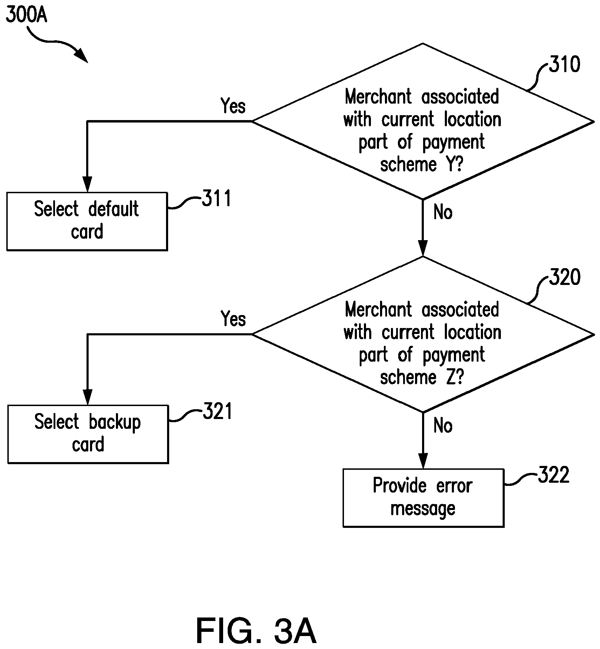

Figure 3A illustrates how the digital wallet described herein can be used to avoid an incorrect card being presented in one common circumstance. According to this example, the digital wallet stores two digitised cards: a user-set default card for use in payment scheme Y and a back-up card for use in payment scheme Z. Example digital wallet application logic 300A proceeds as follows. Query 310 asks whether the determined location is in a merchant that is part of payment scheme Y. If the answer is yes, the default card is selected at step 311. If the answer is no, the flow moves on to query 320. Query 320 asks whether the determined location is in a merchant that is part of payment scheme Z. If the answer is yes, the backup card is selected at step 321. If the answer is no, then the processor causes the user interface to provide an error message to the user at step 322. In the case where the backup card is selected for use, the wallet can then optionally prompt the user to add a rule to use the backup card each time they visit this particular merchant in future. This could for example be based on the merchant identity or the combination of merchant identity and location.

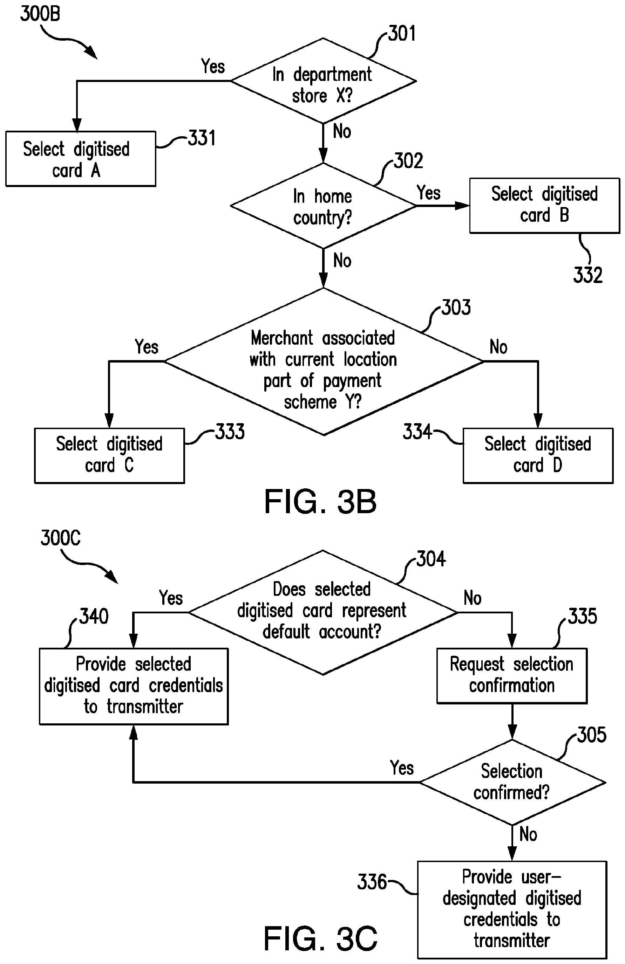

Further example digital wallet application logic 300B is illustrated by the flowchart of Figure 3B for a digital wallet storing the following digitised cards:
A. department store X loyalty credit
B. co-badged credit for use in home country in local payment network
C. co-badged credit for use abroad in payment scheme Y's international network
D. current account non-payment scheme Y debit.
wherein the co-badged credit account represented by digitised cards B and C is pre-set as the user's default payment account.

Query 301 asks whether the determined location is in a premises of department store X. If the answer is yes, digitised card A is selected at step 331. If the answer is no, the flow moves on to query 302.

Query 302 asks whether the determined location is in the user's registered home country. If the answer is yes, digitised card B is selected at step 332. If the answer is no, the flow moves on to query 303.

Query 303 asks whether the determined location is in a merchant that is part of payment scheme Y. If the answer is yes, digitised card C is selected at step 333. If the answer is no, digitised card D is selected at step 334. If the location data is obtained from a message transmitted by the merchant, e.g. from an instore WiFi access point or a checkout lane beacon, or from the POS terminal itself, that message could explicitly include an indication of the card association schemes accepted by that merchant. Otherwise, the received location data could be used in conjunction with a database storing an indication of the card association schemes accepted by various merchants. Such a database could be stored in the mobile user device's memory, or it could be stored on an external server with which the mobile user device can communicate. The latter option reduces memory and battery use of the mobile user device and ensures the database is always up to date. Alternatively, if the mobile user device is internet-enabled it could search the web to determine the card association schemes accepted by the merchant.

For regulatory reasons, or as a result of a pre-set user preference, the user may need to be alerted if any account other than their pre-set default payment account is to be used. For example, once a digitised card has been selected, the processor can follow logic 300C as illustrated in Figure 3C. Query 304 asks whether the selected digitised card matches the default account. If the answer is yes, the selected digitised card is provided to the transmitter at step 340. If the answer is no, at step 335 the processor causes the user interface to prompt the user to either confirm the selection, or manually select a different digitised card at step 335. Once user input has been received, query 305 asks whether the user has confirmed the selection. If the answer is yes, the selected digitised card is provided to the transmitter at step 340. If the answer is no, digitised card credentials designated by the user are provided to the transmitter at step 336.

While this kind of user confirmation process slows the transaction timeline compared to fully automatic selection, it can still prevent transactions being attempted which are doomed to failure and the associated payment network communication delays and possible embarrassment for the user and/or cashier.

If the user does not wish to use the selected digitised card, then providing an indication of this decision via the user interface could result in automatic designation of the default account. Alternatively, the user interface could prompt the user to select from either all stored accounts, or only those accounts determined to be usable in the current location (e.g. based on the card association the merchant accepts).

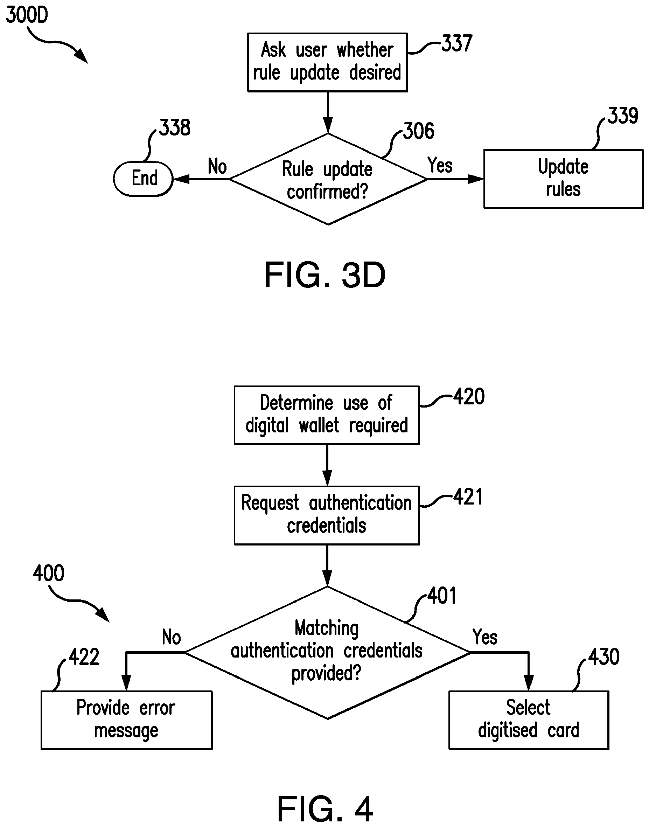

Figure 3D illustrates example logic 300D that could be followed in response to a user failing to confirm an automatic digitised card selection, whether in the circumstances of Figure 3C or otherwise. For example, the logic illustrated in Figure 3D could flow directly from step 336 of Figure 3C. At step 337, the processor causes the user interface to prompt the user to indicate whether the automatic selection rules should be updated in light of their decision to ignore them on this occasion. Once the user has responded using the user interface, query 306 asks whether the user has confirmed they require a rule update. If the answer is no, the flow ends at 338. If the answer is yes, the rules are updated at step 339. Such an update could for example comprise making the user-designated account a location-specific default, e.g. for all premises of the merchant the mobile user device has been determined to be in, or for just that branch.

An authentication step could also be built into the process of Figure 2. For example, to provide increased security to use of the digital wallet application, the user may have to provide one or more remembered credentials such as a personal identification number (PIN) or password. Alternatively or additionally, one or more biometric credentials such as fingerprint or iris scans could be required. In either case, the credentials provided by the user could be checked against credentials stored in the memory so that only users able to provide credentials matching the stored credentials are given access to the digital wallet application, or to certain of its functions, such as making payments or updating registration details.

If user authentication is to be performed, this could take place at any point prior to provision of the digitised card credentials to the transmitter. In the process of Figure 2, one suitable time to perform the authentication is in response to the determination that use of the digital wallet application is required, and prior to selection of the digitised card. This reduces the resources (memory, battery power etc.) used up by attempts at fraudulent use of the digital wallet application. Digital wallet application logic 400 for this circumstance is illustrated in the flowchart of Figure 4.

At step 420, it is determined that use of the digital wallet application is required, for example in a similar manner to step 220 of Figure 2. At step 421, the processor then causes the user interface to prompt the user to provide authentication credentials. Query 401 asks whether credentials received via the user interface match those stored in the memory. If the answer is yes, then a digitised card is selected at step 430, for example in a similar manner to step 230 of Figure 2. If the answer is no, then the processor causes the user interface to provide an error message to the user at step 422. The user could then for example be given one or more further opportunities to provide the correct credentials before use of the digital wallet application is finally locked, and an administrator informed if appropriate.

Alternatively or additionally, authentication could be performed in response to selection of the digitised card. This could be advantageous for example if specific authentication is required for use of a particular account.

Other embodiments will be apparent to those skilled in the art from consideration of the specification and practice of the embodiments disclosed herein. It is intended that the specification and examples be considered as exemplary only.

In addition, where this application has listed the steps of a method or procedure in a specific order, it could be possible, or even expedient in certain circumstances, to change the order in which some steps are performed, and it is intended that the particular steps of the method or procedure claims set forth herein not be construed as being order-specific unless such order specificity is expressly stated in the claim. That is, the operations/steps may be performed in any order, unless otherwise specified, and embodiments may include additional or fewer operations/steps than those disclosed herein. It is further contemplated that executing or performing a particular operation/step before, contemporaneously with, or after another operation is in accordance with the described embodiments.

The methods described herein may be encoded as executable instructions embodied in a computer readable medium, including, without limitation, non-transitory computer-readable storage, a storage device, and/or a memory device. Such instructions, when executed by a processor (or one or more computers, processors, and/or other devices) cause the processor (the one or more computers, processors, and/or other devices) to perform at least a portion of the methods described herein. A non-transitory computer-readable storage medium includes, but is not limited to, volatile memory, non-volatile memory, magnetic and optical storage devices such as disk drives, magnetic tape, compact discs (CDs), digital versatile discs (DVDs), or other media that are capable of storing code and/or data.

Where a processor is referred to herein, this is to be understood to refer to a single processor or multiple processors operably connected to one another. Similarly, where a memory is referred to herein, this is to be understood to refer to a single memory or multiple memories operably connected to one another.

The methods and processes can also be partially or fully embodied in hardware modules or apparatuses or firmware, so that when the hardware modules or apparatuses are activated, they perform the associated methods and processes. The methods and processes can be embodied using a combination of code, data, and hardware modules or apparatuses.

Examples of processing systems, environments, and/or configurations that may be suitable for use with the embodiments described herein include, but are not limited to, embedded computer devices, personal computers, server computers (specific or cloud (virtual) servers), hand-held or laptop devices, multiprocessor systems, microprocessor-based systems, set top boxes, programmable consumer electronics, mobile telephones, network personal computers (PCs), minicomputers, mainframe computers, distributed computing environments that include any of the above systems or devices, and the like. Hardware modules or apparatuses described in this disclosure include, but are not limited to, application-specific integrated circuits (ASICs), field-programmable gate arrays (FPGAs), dedicated or shared processors, and/or other hardware modules or apparatuses.

User devices can include, without limitation, static user devices such as PCs and mobile user devices such as smartphones, tablets, lapops and smartwatches.

Receivers and transmitters as described herein may be standalone or may be comprised in transceivers. A communication link as described herein comprises at least one transmitter capable of transmitting data to at least one receiver over one or more wired or wireless communication channels. Such a communication link can optionally further comprise one or more relaying transceivers.

User input devices can include, without limitation, microphones, buttons, keypads, touchscreens, touchpads, trackballs, joysticks and mice. User output devices can include, without limitation, speakers, graphical user interfaces, indicator lights, vibrating elements and refreshable braille displays. User interfaces can comprise one or more user input devices, one or more user output devices, or both.

## Claims

1. A method performed by a mobile user device comprising a wireless transmitter, a wireless receiver, a user interface, a memory storing a digital wallet application and a processor communicatively coupled to the wireless transmitter, wireless receiver, user interface and memory, the method comprising the processor:
determining a location of the mobile user device according to location data received by the wireless receiver;
determining that use of the digital wallet application is required according to input received by the user interface or the wireless receiver;
responsive thereto, automatically selecting one of a plurality of digitised cards associated with the digital wallet application in dependence on the determined location; and
subsequently providing the digitised card credentials to the wireless transmitter.

2. The method of claim 1, wherein the selecting is done further in dependence on one or more rules stored in the memory.

3. The method of either of claims 1 or 2, further comprising, subsequent to selecting the digitised card, the processor causing the user interface to alert a user that the digital wallet application is ready for use.

4. The method of any of claims 1 to 3, wherein the determined location is specified by reference to one or both of a jurisdiction and a particular merchant.

5. The method of any preceding claim, wherein the wireless receiver operates according to one or more protocols selected from: a satellite navigation protocol, a cellular protocol, a WiFi protocol, a Bluetooth™ protocol and a near field communication, 'NFC' protocol.

6. The method of any preceding claim, wherein the determining of the location is performed in response to the determining that use of the digital wallet application is required.

7. The method of any of claim 1 to 5, wherein the determining that use of the digital wallet application is required is performed in response to the determining of the location.

8. The method of any preceding claim, wherein multiple digitised cards of the plurality of digitised cards are associated with a single co-badged card account.

9. The method of any preceding claim, further comprising, between selecting the digitised card and providing the digitised card to the wireless transmitter, the processor:
determining that the selected digitised card does not correspond to a default account pre-stored in the memory;
causing the user interface to prompt a user to provide confirmation that a non-default account can be used; and
receiving said confirmation from the user interface.

10. The method of claim 9, further comprising, after receiving the confirmation, the processor:
causing the user interface to prompt the user to indicate whether an account corresponding to the selected digitised card should be made a location-specific default for a location category comprising the determined location;
receiving an affirmative indication from the user interface; and
adding the selected digitised card, together with the location category, to a location-specific default list stored in the memory.

11. The method of any preceding claim, further comprising, prior to providing the digitised card to the wireless transmitter, the processor:
causing the user interface to prompt a user to provide authentication credentials;
receiving authentication credentials from the user interface; and
determining that the received authentication credentials match authentication credentials stored in the memory.

12. A computer readable medium comprising a set of program instructions which, when executed by a processor, cause the processor to perform the method of any preceding claim.

13. A mobile user device comprising a wireless transmitter, a wireless receiver, a user interface, a memory storing a digital wallet application and a processor communicatively coupled to the wireless transmitter, wireless receiver, user interface and memory, the processor being configured to perform the method of any of claims 1 to 11.

14. A system comprising the mobile user device of claim 13 and a point of sale (POS) terminal, the mobile user device and POS terminal being configured for wireless communication with one another.

15. The system of claim 14, further comprising one or more of:
a satellite navigation network satellite,
a cellular base station,
a WiFi access point, and
a Bluetooth™ beacon,
configured for wireless communication with the mobile user device, the mobile user device being correspondingly configured for wireless communication therewith.
